# EUROPEAN PATENT APPLICATION

(11) **EP 4 482 084 A1**
(43) Date of publication of application: **25.12.2024**
(21) Application number: 23181226.4
(22) Date of filing: 23.06.2023
(51) Int. Cl.: H04L 9/40, H04W 12/03, H04W 48/16, H04W 84/12, H04W 12/037, H04W 12/08

(54) **ENCRYPTED SERVICE SET IDENTIFIER**

(71) Applicant: Vestel Elektronik Sanayi ve Ticaret A.S., 45030 Manisa (TR)
(72) Inventor: AYGÜL, Mehmet Ali, 45030 Manisa (TR); KIRISKEN, Barbaros, 45030 Manisa (TR)
(74) Representative: Grünecker Patent- und Rechtsanwälte PartG mbB

(57) **Abstract**

The present disclosure relates to communication between a communication device and an access point. For example, a communication device is provided for receiving and transmitting signals and is configured to obtain, from an access point, an first service set identifier, SSID, which is an encrypted second SSID of the access point; (ii) transmit to the access point access information related to the first SSID; (iii) receive, from the access point, a private key; and (iv) obtain the second SSID of the access point by applying the private key to the first SSID. Correspondingly, an access point for receiving and transmitting signals is provided and configured to (i) transmit a first service set identifier, SSID, which is an encrypted second SSID of the access point; (ii) receive, from a communication device, access information related to the first SSID; and (iii) transmit, to the communication device, a private key for obtaining a second SSID by applying the private key to the first SSID.

## Description

The present invention relates to transmission and reception of service set identifiers, SSIDs, in a wireless local network, WLAN; and in particular to devices and methods for such transmission and reception.

### BACKGROUND

Wireless Local Area Networks (WLAN) has been used for local communication between various kinds of devices. For example, IEEE 802.11 standard family has been referred to as Wi-Fi and used in WLANs.

A service set identifier (SSID) is a sequence of characters that uniquely names a Wi-Fi network. An SSID is sometimes referred to as a network name. According to the IEEE 802.11 standard family, an SSID can be as long as 32 characters. Access points (APs) and wireless router networks broadcast their SSIDs to identify themselves. Wireless devices supporting Wi-Fi may read the broadcast and connect to a network or enable a user of the respective device to select from available networks (networks from which the SSID broadcast has been received). The appearance of the names of SSIDs can cause open Wi-Fi networks to be exposed to attacks such as "packet sniffing" and then "brute force". This may be especially the case for company Wi-Fi networks. When an attacker sees a company SSID, (s)he may try to access the network to get private information about the company, may try to crash the Internet system of the company, and/or try to encrypt information of the company to obtain ransom for decrypting back the data, or the like. On the other hand, although new encryption algorithms such as WPA3 reduce such "man-in-the-middle" attacks, it is still possible to be exposed to "denial of service" and similar attacks. Although hiding the SSID may be a good solution, in such case, in order to be connected, a user must know both the full SSID name and the password.

In a typical access scenario, a user is able to find close network SSIDs that are broadcasted and can connect to these networks for instance by entering the corresponding password or confirming some conditions or the like. For the case of the hidden access, more steps may be necessary before entering the SSID and the corresponding password, which means that the user would need to use a user interface such as a keyboard more. This may pose no problems for computers and phones since it is easy to use keyboards and other interface types on these devices. However, in the case of devices without screens (e.g. Internet of things, loT, devices), this may be more complicated. Thus, hidden SSIDs may create difficulties for instance for devices without screens, such as household appliances or the like.

### SUMMARY

Methods and techniques are described herein for facilitating transmission and reception of SSIDs, and in particular increasing security of a WLAN by providing an encrypted SSID.

The invention is defined by the independent claims. Some exemplary implementations are provided by the dependent claims.

The present disclosure provides a communication device comprising a transceiver and a circuitry. The transceiver serves for receiving and transmitting signals. The circuitry may be a processing circuitry and is configured to control the transceiver to (i) obtain, from an access point, an first service set identifier, SSID, which is an encrypted second SSID of the access point; (ii) transmit to the access point access information related to the first SSID; (iii) receive, from the access point, a private key; and (iv) obtain the second SSID of the access point by applying the private key to the first SSID.

In addition or alternatively, the present disclosure provides an access point comprising a transceiver and circuitry. The transceiver serves (is configured) for receiving and transmitting signals. The circuitry may be a processing circuitry and is configured to control the transceiver to: (i) transmit a first service set identifier, SSID, which is an encrypted second SSID of the access point; (ii) receive, from a communication device, access information related to the first SSID; and (iii) transmit, to the communication device, a private key for obtaining a second SSID by applying the private key to the first SSID.

These and other features and characteristics of the presently disclosed subject matter, as well as the methods of operation and functions of the related elements of structures and the combination of parts and economies of manufacture, will become more apparent upon consideration of the following description and the appended claims with reference to the accompanying drawings, all of which form a part of this specification. It is to be expressly understood, however, that the drawings are for the purpose of illustration and description only and are not intended as a definition of the limits of the disclosed subject matter. As used in the specification and the claims, the singular form of "a," "an," and "the" include plural referents unless the context clearly dictates otherwise.

### BRIEF DESCRIPTION OF DRAWINGS

An understanding of the nature and advantages of various embodiments may be realized by reference to the following figures.
- FIG. 1: is a block diagram illustrating a generic communication system with a transmitter and a receiver.
- FIG. 2: is a block diagram illustrating an exemplary structure of a communication device.
- FIG. 3: is a block diagram illustrating an exemplary functional structure of a memory of the communication device storing functional program modules.
- FIG. 4: is a block diagram illustrating an exemplary structure of an access point.
- FIG. 5: is a block diagram illustrating an exemplary functional structure of a memory of the access point storing functional program modules.
- FIG. 6: is a flow diagram illustrating steps performed by the communication device and the access point to share explanatory information related to an encrypted SSID.
- FIG. 7: is a schematic drawing illustrating an exemplary communication between the communication device and the access point for obtaining an SSID.
- FIG. 8: is a flow diagram illustrating a method performed on a communication device and the AP, as well as exchange of communication between them.

Like reference numbers and symbols in the various figures indicate like elements, in accordance with certain example implementations.

### DETAILED DESCRIPTION

For purposes of the description hereinafter, the terms "end," "upper," "lower," "right," "left," "vertical," "horizontal," "top," "bottom," "lateral," "longitudinal," and derivatives thereof shall relate to the disclosed subject matter as it is oriented in the drawing figures. However, it is to be understood that the disclosed subject matter may assume various alternative variations and step sequences, except where expressly specified to the contrary. It is also to be understood that the specific devices and processes illustrated in the attached drawings, and described in the following specification, are simply exemplary embodiments or aspects of the disclosed subject matter. Hence, specific dimensions and other physical characteristics related to the embodiments or aspects disclosed herein are not to be considered as limiting unless otherwise indicated.

No aspect, component, element, structure, act, step, function, instruction, and/or the like used herein should be construed as critical or essential unless explicitly described as such. Also, as used herein, the articles "a" and "an" are intended to include one or more items and may be used interchangeably with "one or more" and "at least one." Furthermore, as used herein, the term "set" is intended to include one or more items (e.g., related items, unrelated items, a combination of related and unrelated items, and/or the like) and may be used interchangeably with "one or more" or "at least one." Where only one item is intended, the term "one" or similar language is used. Also, as used herein, the terms "has," "have," "having," or the like are intended to be open-ended terms. Further, the phrase "based on" is intended to mean "based at least partially on" unless explicitly stated otherwise.

### Communication system

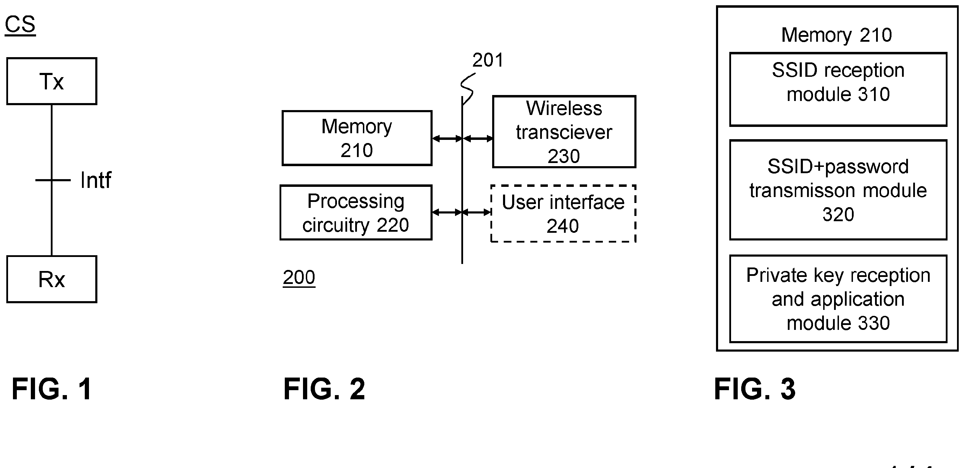

Fig. 1 illustrates an exemplary communication system CS in which Tx represents a transmitter and Rx represents a receiver. The transmitter Tx is capable of transmitting a signal to the receiver Rx over an interface Intf. The interface Intf may be, for instance, a wireless interface. The interface may be specified by means of resources, which can be used for the transmission and reception by the transmitter Tx and the receiver Rx. Such resources may be defined in one or more (or all) of the time domain, frequency domain, code domain, and space domain. It is noted that in general, the "transmitter" and "receiver" may be also both integrated in the same device. In other words, the devices Tx and Rx in Fig. 1 may respectively also include the functionality of the Rx and Tx.

The present disclosure is not limited to any particular transmitter Tx, receiver Rx and/or interface Intf implementation. However, it may be applied readily to some existing communication systems as well as to the extensions of such systems, or to new communication systems. Exemplary existing communication systems may be, for instance the 5G New Radio (NR) in its current or future releases, and/or WLAN such as the IEEE 802.11 based systems (e.g. the recently studied IEEE 802.11be or the like), and/or WPAN such as Bluetooth. For example, Tx and Rx may communicate with each other via the interface Intf that may be Bluetooth and/or Wi-Fi.

In the present disclosure, SSIDs are published as encrypted SSID names instead of given names which may have some meaning. Table 1 below shows such encrypted SSID names in the first column headed as "SSID Search (Public Key))". The term "public key" here refers to the encrypted SSID name, because it is publicly available, for instance broadcasted by the access point, AP, and found by the usual search foe available SSIDs by a device.

**Table 1: Before the handshake**

| **SSID Search (Public Key)** | **Private Key** | **Password PSK or similar)** | **Explanation** |
|---|---|---|---|
| weert2455666aasas *** | Unknown | abc. 12345678 | This is "KnownAP_Home" suggested. |
| abcdef123456qwe | - | Unknown | Unknown |
| qwert1234567asd | - | Unknown | Unknown |
| bnmo9876543qwe | - | Unknown | Unknown |
| werty994444665qwe | - | Unknown | Unknown |
| .......................... | | | |
| .......................... | | | |

When a user makes a listing of the available SSIDs, they see encrypted SSID names (public keys) instead of the real, meaningful names (given by the Wi-Fi provider). Here "a user" may be a human user that wishes to connect to a WLAN, or it may be an application running on a device. When the user selects an SSID (e.g. a human user clicks on the SSID) to connect to, and possibly enters the corresponding password, a private key is generated in the AP and sent to the user. After the user receives the private key, the user will be able to see the SSID name by decrypting the encrypted SSID name with the private key provided from the AP.

This is illustrated in an example in Table 2. In particular, the encrypted SSID name "weert2455666aasas" shown in Table 1 is decrypted after the user selects this SSID, enters the password "abc.12345678", obtains a private key "werty123456apcd", and applies it to the encrypted SSID. The decrypted SSID in this example is "KnownAP_Home", which can be seen in the list of SSIDs in Table 2.

**Table 2: After the handshake**

| **SSID Search (Public Key)** | **Private Key** | **Password (PSK or similar)** | **Explanation** |
|---|---|---|---|
| abcdef123456qwe | - | Unknown | Unknown |
| qwert1234567asd | - | Unknown | Unknown |
| bnmo9876543qwe | - | Unknown | Unknown |
| KnownAP_Home | werty123456apcd | abc. 12345678 | Known recorded |
| werty994444665qwe | - | Unknown | Unknown |
| .......................... | | | |
| .......................... | | | |

In order to implement the above mentioned procedure, a communication device is provided. Structure of such communication device 200 is illustrated in Fig. 2. In particular, the communication device 200 comprises a transceiver 230 for receiving and transmitting signals and processing circuitry 220. The transmission and reception of the signals may be performed over the WLAN. For example, the communication device 200 may correspond to the receiver Rx and/or to the transmitter Tx of Fig. 1, and the WLAN interface is an example of the generic interface Intf.

The processing circuitry 220 is configured to control the transceiver 230. Such configuration may be performed, for instance by reading, from a memory 210, a program that then controls the transceiver 230. The memory 210 may be a part of the communication device 200. The processing circuitry 220, the transceiver 230, and the memory 210 may be connected via a bus 201. Moreover, the communication device, in some embodiments, may further comprise a user interface 240 that may include a user output module and/or a user input module. The user input module may be, for example, a keyboard or a touch screen or the like. The user output may be, for example, a display device.

Fig. 3 shows schematically a block diagram of the memory 210, including functional modules of the program that may control the transceiver to perform their respective functions.

In particular, the processing circuitry 220 is configured to control the transceiver to
- obtain, from an access point, an first service set identifier, SSID, which is an encrypted second SSID of the access point. This may be performed by an SSID reception module 310.
- transmit to the access point an access information related to the first SSID. This may be performed by an SSID and password transmission module 320.
- receive, from the access point, a private key. This may be performed by an private key reception and application module 330.
- obtain the second SSID of the access point by applying the private key to the first SSID. This may be also performed by said private key reception and application module 330.

In other words, the communication device may be in communication with an access point, AP. The AP has assigned (at least) two different SSIDs, the second SSID configured by a user as is usual and another one, which is the first SSID obtained by encrypting the second SSID. The first SSID may be a name with a meaning for humans, e.g. indicating name given by the user to the network. The name may be associated with the institution or user that provides the WLAN.

The access information includes one or more of the first SSID and a password. Moreover, a communication device identifier such as a Medium Access Control (MAC) address of the communication device should be provided from the communication device to the access point. Here, in particular, the first SSID and the password are access information that relates to the first SSID. The MAC address of the communication device 200 is provided to the AP so that the AP can transmit, to the communication device 200 the private key without broadcasting it to other users (stations, STA or other access points).

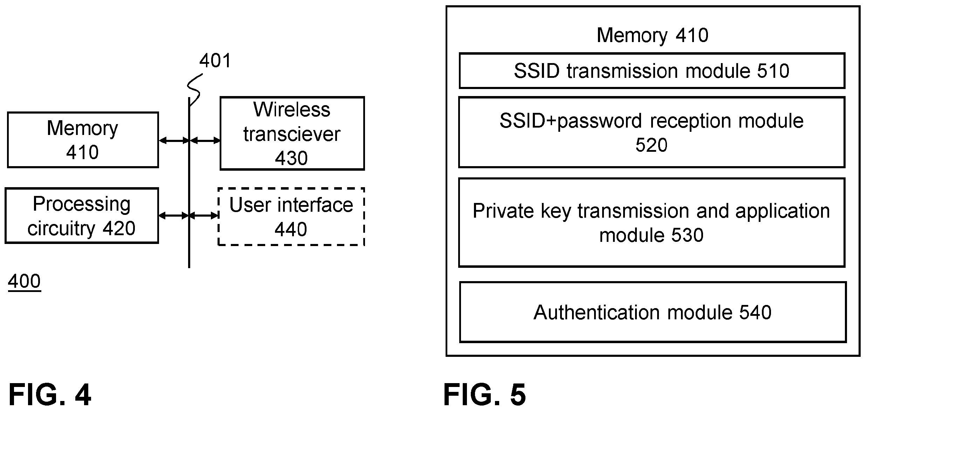

Correspondingly to the communication device, an access point 400 is provided, with an exemplary structure shown in Fig. 4. The access point 400 comprises a transceiver 430 for receiving and transmitting signals and a processing circuitry 420.

The transmission and reception of the signals may be performed over the WLAN. For example, the AP 400 may correspond to the receiver Rx and/or to the transmitter Tx of Fig. 1, and the WLAN interface is an example of the generic interface Intf over which the AP communicates with the communication device 200.

The processing circuitry 420 is configured to control the transceiver 430. Such configuration may be performed, for instance by reading, from a memory 410, a program that then controls the transceiver 430. The memory 410 may be a part of the communication device 400. The processing circuitry 420, the transceiver 430, and the memory 410 may be connected via a bus 401. Moreover, the AP, in some embodiments, may further comprise a user interface 440 that may include a user output module and/or a user input module. The user input module may be, for example, a keyboard or a touch screen or the like. The user output may be, for example, a display device. It is noted that these user input devices are not necessarily part of the AP. The AP may merely have an input port and an output port as the user input and user output, respectively. The ports may be connected to some external input means (e.g. keyboard, touch screen, etc) and/or output means (e.g. screen, display, projector unit) wirelessly or via a connector arranged on the AP.

Fig. 5 shows schematically a block diagram of the memory 410, including functional modules of the program that may control the transceiver to perform their respective functions.

In particular, the processing circuitry 420 is configured to control the transceiver to control the transceiver 430 to
- transmit a first service set identifier, SSID, which is an encrypted second SSID of the access point. This may be performed by an SSID transmission module 510.
- receive, from a communication device, access information related to the first SSID. This may be performed by an SSID reception module 520.
- transmit, to the communication device, a private key for obtaining a second SSID by applying the private key to the first SSID. This may be performed by the private key application and transmission module 530.

The transmission of the SSID may be performed by way of broadcasting, as is defined by the IEEE 802.11 standard family. In this way, any communication device in the sufficient proximity of the AP (coverage) may receive the transmission of the SSID.

As mentioned above, the access information includes the first SSID and, in some embodiments, a password. Moreover, the MAC address of the communication device may be provided to the AP. In particular, the access information includes at least the first SSID so that the AP can recognize that the request is directed to it. Moreover, in case the AP protects the WLAN access to by a password, the password should be sent as a part of the access information. Finally, in order to be able to transmit response back to the requesting communication device, the AP should receive an identifier of the communication device. One example for the identifier of the communication device is the above-mentioned MAC address as is the case in the current networks. However, the present disclosure is not limited to such identifier and other identifier kinds can be used instead. It is also noted that the term first SSID may be understood broadly. The first SSID is an identification of the access point that corresponds to the encrypted second SSID of the access point. It is the second SSID of the access point which is actually used in the WLAN to access the AP services.

Before transmitting the private key to the communication device, the access point may perform authentication. In particular, in case a password is used by the AP to allow access to its services, it is checked whether the password send as a part of the access information is correct. For this purpose, the AP may include a storage module (not shown in the drawing) or may store in the memory 410 the password. Then, the received from the communication device and the password stored are compared by the AP. If they are the same, the AP transmits to the communication device (identified by the communication device identifier of the communication device) the private key. If they are not the same, the AP does not transmit to the communication device the private key. This authentication may be performed by the authentication module 540.

The processing circuitry 220 in the communication device and/or the processing circuitry 420 in the access point may include any circuitry such as one or more processors. However, the processing circuitry may be or comprise various kinds of hardware such as micro-controller and/or programmable hardware (e.g. one or more FPGAs) and/or specialized hardware (e.g. one or more ASICs) or the like. The processing circuitry, as mentioned above, may be configured by software running on the processing circuitry and/or by the hardware structure of the processing circuitry.

The transceiver 230 in the communication device and/or the transceiver 430 in the access point may include antenna ports (and possibly but not necessarily also antennas), the analog front end including amplifiers and the like. In some embodiments, the transceivers may also include at least a part of baseband processing of the physical layer including modulation and coding functionality.

In an exemplary implementation, the processing circuitry 220 of the communication device is further configured to connect to the access point 400 and/or access WLAN over the access point 400 and/or access Internet over the access point (the access point identified with the second SSID) 400. In particular, the processing circuitry may be configured to transmit, to the AP 400 the second SSID a request for connection which may include access information. The access information may include the second SSID and, where a password is set for accessing the AP with the second SSID, also the password associated with the second SSID. Moreover, as also in the case of accessing the AP with the first SSID, the communication device may transmit its identification (such as the MAC address).

It is noted that the password associated with the second SSID may be the same as the password associated with the first SSID (and transmitted within the access information related to the first SSID). However, the password associated with the first SSID and the password associated with the second SSID may also differ. The present disclosure may also work in cases in which there is no password associated with the first SSID and/or with the second SSID.

Correspondingly, the processing circuitry 420 of the access point is further configured to control the transceiver 430 to receive an Internet access request and/or a WLAN access request and/or a WLAN connection request accompanied by the second SSID from the communication device (and possibly by a password associated with the second SSID). The processing circuitry 420 may be further configured to enable the Internet access and/or the WLAN access and/or the WLAN connection to the communication device 200.

The enabling may be preceded by a step of performing the authentication (e.g. by the authentication module 440). Such authentication may include checking of the password (associated with the second SSID) in a similar manner as the above mentioned checking the password associated with the first SSID (before transmitting the private key). However, the authentication in both cases is not limited to checking the password. Rather, there may be further checks concerning the communication device identity (e.g. the MAC address). For instance, an AP may store a black list or a white list or the like regarding identities of the communication devices. The present disclosure is not limited to any particular authentication procedure.

The communication device 200 mentioned above may further comprise a storage (which may be same as the memory 210 or different from the memory 210). The processing circuitry 220 may store the first SSID in association with the second SSID in the storage. In other words, once the private key has been received and the second SSID obtained, the second SSID may be stored for further use in the communication device and directly used to access the network once the first SSID has been observed (broadcast of the first SSID received). If password is associated with the second SSID, the password may also be stored in the storage or elsewhere in the communication device in order to enable automatic connection to the network with the second SSID and the associated password.

It is noted that the pre-stored second SSID may be shown directly in the list of the networks available to the user for selection. Alternatively or in addition, the first SSID may be shown in association with an information that the second SSID associated with the first SSID is available in the storage, or the like.

### Conditional transmission of explanatory information

In the following, an embodiment is described that may be combined with the above described encrypted SSID embodiment. In the beginning, a user will not know which encrypted (first) SSID to select or enter (which Wi-Fi network is the one (s)he wants to connect to), since the first SSID names are seen encrypted and are not recognizable for the user. In order to further facilitate the connection, an AP may send an explanation (explanatory information) to users that are with a high probability considered as being legitimate.

In particular, in this the access point 400 (e.g. its processing circuitry 420) is configured to control the transceiver 430 to receive a message from the communication device 200. The message may include the first SSID. Then, the access point 400 (e.g. its processing circuitry 420) determines whether the communication device is legitimate. In case the communication device is determined as legitimate, access point 400 (e.g. its processing circuitry 420) transmits (e.g. controls the transceiver 430 to transmit) to the communication device 200 an information related to the first SSID. In case the communication device 200 is determined as not legitimate, the access point 400 (e.g. its processing circuitry 420) will not transmit (e.g. control the transceiver 430 to transmit) to the communication device 200 the information related to the first SSID.

Said information is, for example, the second SSID or information describing the second SSID. The description of the second SSID may be such that a human reader (user) can understand it and associate with the second SSID. An example of such explanation can be seen in the above Table 1. For example, the explanatory information may be the text "This is "KnownAP_Home" suggested." in the column marked as "Explanation".

It is noted that the message received from the communication device can be any message carrying an ID of the communication device (e.g. the MAC address) and that the transmission of the explanatory information is carried out by the AP to the received ID of the communication device. In this way, it can be ensured that the communication device that passed the test of legitimacy will see the explanatory information while other devices, which did not pass the legitimacy test, will not see the explanatory information. It is also noted that the transmission of the explanatory information may be encrypted. For example, Wi-Fi Protected Access (WPA) 2 or WPA3 protocols may be used for wireless encryption. Alternatively or in addition, other techniques used for eavesdropping attacks in the literature may be used here. For example, the key between AP and STA can be generated based on the Diffie-Hellman private key generation algorithm or the like. Alternatively or in addition, lower layer protocols/techniques (e.g. techniques at physical layer) may be used for key generation. For example, based on the channel between the AP and STA the key can be generated and encyrption can be performed.

Correspondingly to the above described exemplary behavior of the AP, the communication device 200 (its processing circuitry 220) is configured to control its transceiver 230 to receive an information from the access point 400 related to the first SSID. Such reception of the information may be performed anytime after the communication device transmitted its identification (e.g. MAC address) to the AP. As mentioned above, such explanatory information is transmitted from the AP to the communication device in case the communication device is determined as legitimate by the AP. In an exemplary implementation, a communication device is determined as legitimate, if it is located in a proximity of the access point. Said explanatory information is the second SSID or information describing the second SSID.

In order to determine legitimacy, an AP can check for some features such as the proximity of the communication device to the AP. The proximity may be determined in various ways and the present disclosure is not limited to any particular way. Some possible ways include evaluating one or more features of the communication device such as Received Signal Strength Indicator (RSSI) or other reception quality measures or the like. For example, any communication device of which RSSI exceeds a certain pre-defined threshold may be determined to be legitimate, while communication devices below the threshold (or equal) may be determined as not legitimate.

Note that in this specific example, we only consider the RSSI feature to decide whether the user is legitimate or not. However, other additional or alternative features can be easily adopted. These features can include, RF impairments, MAC address, wireless channel, etc. of the user. RF impairments may be for example blockage of line of sight. The MAC addresses may be while-listed or black-listed at the AP. Wireless channel characteristics may include signal strength, angle, error rate, or the line.

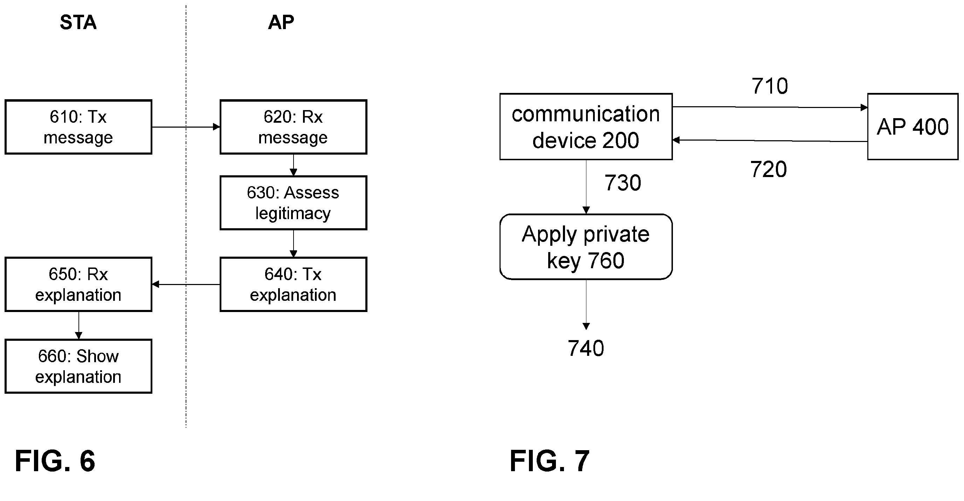

Fig. 6 shows an illustration of an exemplary message exchange and steps that may be performed at the communication device (STA) and access point (AP) in order to share the explanatory information. A STA transmits 610 a message to the AP. This may be any message including a STA identification. The AP receives 620 the message and assesses 630 the legitimacy of the STA (e.g. by evaluating proximity). If the STA is determined not to be legitimate, the message exchange ends or the AP may send STA an error message or the like. If the STA is determined to be legitimate, the AP sends 640 to the STA the explanatory information. The STA received 650 the explanatory information and shows 660 the explanatory information to a user of the STA (e.g. in the list of available APs / WLANs).

Steps 610, 650, and 660 may be performed by the above-mentioned communication device 200, and in particular, by processing circuitry 220 that may control the transceiver 230 (in steps 610 and 650) to transmit / receive accordingly. Steps 620-640 may be performed by the above-mentioned AP 400, and in particular, by processing circuitry 420 that may control the transceiver 430 (in steps 620 and 640) to transmit / receive accordingly.

### Legitimacy check before transmitting private key

In addition or alternatively to the above mentioned embodiment concerning the explanatory information, a legitimacy check may be performed by the AP before sending the private key.

In the beginning, the Internet SSIDs are encrypted as in column SSID Search (Public Key) in Table 1. An exemplary scenario may be assumed that an illegitimate user is outside of the company and a legitimate user is in the company. In the beginning, both of the users see the first SSIDs as encrypted. Then, based on the Internet protocol/or manually, both of them try to connect to the AP (e.g. to access Internet). Then, the APs sends a private keys to the user. The company AP may send private key to the legitimate user, while the illegitimate user will not obtain the private key from this AP. It can get a key from another AP, e.g. an AP that is nearer to it. As mentioned above, proximity may be a good choice to determine the legitimacy. However, the present disclosure is not limited thereto and other parameters may be used, such as channel characteristics, impairment characteristics, or the like. After confirming legitimacy, the AP can send the private key to the legitimate users. The users can decrypt the SSID name using the private key and learn it (e.g. store it as mentioned above, by way of storing relation between the first SSID and the second SSID or by storing the private key or the like).

For example, the communication devices may be connecting to the AP in order to access Internet. In some exemplary implementations, after providing the second SSID and possibly (if required) the password, the AP may enable the communication devices to connect to the Internet., whereas the first SSID/password may not allow for Internet access.

For example, the access point 400 and in particular its processing circuitry 420 may be further configured to, upon receiving the first SSID and the password, determine whether the communication device is legitimate. If the communication device is considered (determined) to be legitimate, the processing circuitry 420 may be configured to transmit, to the communication device, the private key for obtaining the second SSID. The processing circuitry 420 is further configured not to transmit, to the communication device, the private key for obtaining the second SSID, if the communication device is considered not to be legitimate.

In some exemplary implementations, the processing circuitry 420 is further configured to, if the communication device is considered (determined) not to be legitimate, transmit, to the communication device, a private key for obtaining a third SSID (different from the fist and the second SSID). For example, the third SSID may only provide a limited set of services compared to the services provided by the second SSID network. For example, the network of the third SSID may restrict or forbid Internet and/or Intranet access.

As mentioned above, the determining whether the communication device is legitimate comprises at least one of:
- determining whether the communication device is located in a proximity of the access point. Apart from RSSI, proximity indicating parameters may include Time of arrival (TOA or ToA), time of transmission (TOT or ToT), time of flight (TOF or ToF), and/or time difference of arrival (TDOA) or the like.
- determining whether received signal power exceeds a predefined threshold. This may be also a proximity indication.
- determine whether radio frequency impairments match predefined characteristics. Examples of such RF impairments may include Frequency offset, I/Q gain imbalance, quadrare offset, phase noise, and/or I/Q offset. "I/Q" stands for imaginary/quadrature components of a complex number.
- determine whether medium access control, MAC, address is included in a set of predetermined MAC addresses (whitelisted or blacklisted).

### Methods for transmitting and receiving SSID

As briefly described above, typically, illegitimate users first want to learn the SSID names of the companies to access their Internet. Therefore, some companies hide their SSID names and share the names only with their employers/employees. However, connecting to Internet with hidden SSIDs have several disadvantages. The first one is all of the users should know the SSID, but normally, people only know the password and get the SSID with a Wi-Fi search using their computer/mobile phone. The second disadvantage is accessing the Internet with hidden SSID is not known by everybody, and companies should teach these steps to their employees. In the above-mentioned embodiments, illegitimate users cannot see the SSID names of the companies publicly. Instead, they see the encrypted versions of them. This is more secure than the case where SSIDs are publicly available. Then, based on e.g. the proximity feature, the WLAN (AP providing the WLAN) shares the secret (private) keys with legitimate users. Therefore, they can decrypt the SSID and learn the SSID name. This is more accessible and automatic (automatable) approach when comparing it with the hidden SSID-based techniques. This is because there is no need users to enter SSID names and to know the SSID of the company.

Also, after they decrypt the (first) SSIDs, legitimate users can control whether they connect to the correct network or not. In any of the embodiments described herein, the password for the first and second SSID may be same or may differ. In case of different passwords, when the private key is provided to the communication device by the AP, the AP may also provide the password to the communication device.

This control mechanism is especially important when the AP also shares the password of the network (WLAN operated by the AP). This is because if the users know the password and access the Internet with this password, they can know that they connected to correct network. However, for the cases where AP also shares the password, they need another control mechanism to know whether they connect to correct network or not. In this case, they can control that with SSID names after they decrypt it.

An exemplary interaction between the communication device 200 and the access point 400 is illustrated in Fig. 7. The AP 400 receives 710 from the communication device 200 its first SSID (and possibly a password). The AP 400 verifies these (SSID+password) and if they are correct, transmits 720 a private key to the communication device 200. If they are not correct the AP does not transmit the private key to the communication device 200. The communication device then applies 760 the private key to the first SSID and obtains 740 a second SSID thereby.

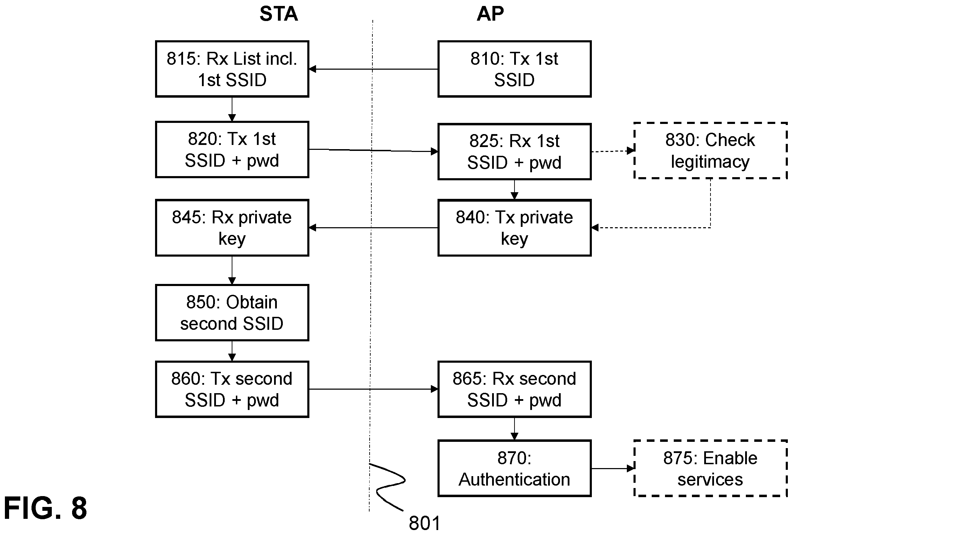

Fig. 8 provides an example of the methods for a communication device (e.g. STA 200) and an AP (e.g. AP 400) and also shows exchange of data between the STA and the AP over a channel 801.

A method for the AP is shown to the right of the channel 801. This method includes transmitting 810 a first service set identifier, SSID, which is an encrypted second SSID of the AP. The transmitting may be broadcasting. However, the present disclosure would also work if it was multicast or unicast.

A method for the STA is shown to the left of the channel 801. This method correspondingly comprises obtaining 815, from the AP, the first SSID, and transmitting 820, to the AP, the first SSID and a password (associated with the first SSID).

Then the method for the AP comprises receiving 825, from the STA, the first SSID and the password, and transmitting 840, to the STA, a private key for obtaining a second SSID by applying the private key to the first SSID. As can be seen from Fig. 8, the AP may include - between the reception 825 and the transmission 840 a step of checking 830 legitimacy of the STA from which the first SSID and the password was received. The check may be performed based on proximity (if the STA is sufficiently close to the AP, it is considered as legitimate) or based on other features of the STA signal. The proximity may be estimated by the AP within the legitimacy check 830 based on the strength of the signal received at the AP from the STA.

Then, the AP may transmit 840 the private key only in case the legitimacy check was positive and not transmit the private key if the legitimacy check was negative. In the latter case, the method for the AP would end or the AP could allow the STA a limited access or send an error message or the like.

The method for the STA then includes a step of receiving 845, from the AP, the private key, and obtaining 850 the second SSID of the AP by applying the private key to the first SSID. Then, the method for the STA further comprises transmitting 860 of the second SSID and a password (associated with the second SSID) to the AP.

Correspondingly, the method for the AP comprises receiving 865 of the second SSID and the password and authentication 870. During authentication, the second SSID and the password are checked and if they are correct, the AP may enable 875 services for the STA. If they are not correct, the AP may disable services for the STA or only enable a limited subset of services to the STA or the like.

As mentioned above, it is not mandatory to send (STA) / expect (AP) password alongside with the first SSID and/or the second SSID.

### Implementations in software and hardware

It is noted that although embodiments and examples of the present disclosure were provided in terms of a method above, the corresponding devices providing the functionality described by the methods are also provided. Moreover, it is noted that any of the steps described above may be included as code instructions in a program, which may be executed by one or more processors.

The methodologies described herein may be implemented by various means depending upon the application. For example, these methodologies may be implemented in hardware, operation system, firmware, software, or any combination of two or all of them. For a hardware implementation, any processing circuitry may be used, which may include one or more processors. For example, the hardware may include one or more of application specific integrated circuits (ASICs), digital signal processors (DSPs), digital signal processing devices (DSPDs), programmable logic devices (PLDs), field programmable gate arrays (FPGAs), processors, controllers, any electronic devices, or other electronic circuitry units or elements designed to perform the functions described above.

If implemented as program code, the functions performed by the transmitting apparatus (device) may be stored as one or more instructions or code on a non-transitory computer readable storage medium. The computer-readable media includes physical computer storage media, which may be any available medium that can be accessed by the computer, or, in general by the processing circuitry. Such computer-readable media may comprise RAM, ROM, EEPROM, optical disk storage, magnetic disk storage, semiconductor storage, or other storage devices. Some particular and non-limiting examples include compact disc (CD), CD-ROM, laser disc, optical disc, digital versatile disc (DVD), Blu-ray (BD) disc or the like. Combinations of different storage media are also possible - in other words, distributed and heterogeneous storage may be employed.

The above examples are not to limited the present disclosure. There are many modifications and configurations, which may be used in addition or alternatively. This present disclosure can be used in any kind of device that is receiving signals over a wireless channel. The embodiments and exemplary implementations mentioned above show some non-limiting examples. It is understood that various modifications may be made without departing from the claimed subject matter. For example, modifications may be made to adapt the examples to new systems and scenarios without departing from the central concept described herein.

### Selected embodiments and examples

According to a first embodiment, a communication device is provided that comprises a transceiver for receiving and transmitting signals; and a processing circuitry configured to: control the transceiver to i) obtain, from an access point, an first service set identifier, SSID, which is an encrypted second SSID of the access point; ii) transmit to the access point access information related to the first SSID; iii) receive, from the access point, a private key; and iv) obtain the second SSID of the access point by applying the private key to the first SSID.

According to a second embodiment, further to the first embodiment, the processing circuitry is further configured to connect to and/or access Internet over the access point identified with the second SSID.

According to a third embodiment, further to the first or second embodiment, the communication device further comprises a storage, wherein the processing circuitry is further configured to: store the first SSID in association with the second SSID, and access the access point directly by using the stored second SSID.

According to a fourth embodiment, further to any of the first to third embodiment, the processing circuitry is configured to control the transceiver to receive an information from the access point related to the first SSID in case the communication device is located in proximity of the access point.

According to a fifth embodiment, further to the fourth embodiment, said information is the second SSID or information describing the second SSID.

According to a sixth embodiment, an access point is provided, comprising: a transceiver for receiving and transmitting signals; and a processing circuitry configured to: control the transceiver to i) transmit a first service set identifier, SSID, which is an encrypted second SSID of the access point; ii) receive, from a communication device, access information related to the first SSID; and iii) transmit, to the communication device, a private key for obtaining a second SSID by applying the private key to the first SSID.

According to a seventh embodiment, further to the sixth embodiment, the processing circuitry is further configured to: control the transceiver to receive an Internet access request accompanied by the second SSID from the communication device; and enabling the Internet access to the communication device.

According to an eighth embodiment, further to the sixth or seventh embodiment, the processing circuitry is further configured to: upon receiving the first SSID and the password, determine whether the communication device is legitimate, if the communication device is considered to be legitimate, transmit, to the communication device, the private key for obtaining the second SSID.

According to a ninth embodiment, further to the eighth embodiment, the processing circuitry is further configured to not transmit, to the communication device, the private key for obtaining the second SSID, if the communication device is considered not to be legitimate.

According to a second embodiment, further to the eighth or ninth embodiment, the processing circuitry is further configured to, if the communication device is considered not to be legitimate, transmit, to the communication device, a private key for obtaining a third SSID.

According to an eleventh embodiment, further to any of the eighth to tenth embodiment, the determining whether the communication device is legitimate comprises at least one of: i) determining whether the communication device is located in a proximity of the access point, ii) determining whether received signal power exceeds a predefined threshold, iii) determine whether radio frequency impairments match predefined characteristics, iv) determining time of arrival, time of transmission, time of flight, and/or time difference of arrival; v) determine whether medium access control, MAC, address is included in a set of predetermined MAC addresses.

According to a twelfth embodiment, further to the tenth or eleventh embodiment, the processing circuitry is configured to: control the transceiver to receive a message from the communication device, determine whether the communication device is legitimate, in case the communication device is determined as legitimate, transmitting to the communication device an information related to the first SSID, and in case the communication device is determined as not legitimate, not transmitting to the communication device an information related to the first SSID

According to a thirteenth embodiment, further to the ninth embodiment, said information is the second SSID or information describing the second SSID.

According to a fourteenth embodiment, a method is provided for a communication device, the method comprising obtaining, from an access point, an first service set identifier, SSID, which is an encrypted second SSID of the access point; transmitting to the access point access information related to the first SSID; receiving, from the access point, a private key; and obtaining the second SSID of the access point by applying the private key to the first SSID.

According to a fifteenth embodiment, a method is provided for an access point, the method comprising: transmitting a first service set identifier, SSID, which is an encrypted second SSID of the access point; receiving, from a communication device, access information related to the first SSID; and transmitting, to the communication device, a private key for obtaining a second SSID by applying the private key to the first SSID.

According to a sixteenth embodiment, a program code is provided which, when executed on one or more processors, causes the one or more processors to perform steps of any of the above mentioned methods. The program may be stored on a computer-readable medium. The medium may be non-transitory.

According to a seventeenth embodiment, an integrated circuit is provided which corresponds to the processing circuitry of the communication device according to any of the first to fifth embodiment. Thus the integrated circuit has all features of the processing circuitry of the respective embodiment of the communication device.

According to an eighteenth embodiment, an integrated circuit is provided which corresponds to the processing circuitry of the access point according to any of the first to fifth embodiment. Thus the integrated circuit has all features of the processing circuitry of the respective embodiment of the access point.

In other words, the processing circuitry according to any of the preceding embodiments may be an integrated circuit.

According to a nineteenth embodiment, a system is provided that comprises the communication device according to any of the preceding embodiments and the access point according to any of the corresponding preceding embodiments.

It is noted that provided are further methods and the corresponding program codes that include steps described above as performed by the processing circuitry of the communication device or by the processing circuitry of the access point. In addition, methods are provided which comprise the steps described above as performed by the processing circuitry of the communication device or by the processing circuitry of the access point, and, in addition steps described above as performed by the transceiver of the communication device and/or the access point.

## Claims

1. A communication device comprising:
a transceiver for receiving and transmitting signals; and
a processing circuitry configured to:
control the transceiver to
- obtain, from an access point, an first service set identifier, SSID, which is an encrypted second SSID of the access point;
- transmit to the access point access information related to the first SSID;
- receive, from the access point, a private key; and
- obtain the second SSID of the access point by applying the private key to the first SSID.

2. The communication device according to claim 1, wherein the processing circuitry is further configured to connect to and/or access Internet over the access point identified with the second SSID.

3. The communication device according to claim 1 or 2, further comprising a storage, wherein the processing circuitry is further configured to:
store the first SSID in association with the second SSID, and
access the access point directly by using the stored second SSID.

4. The communication device according to any of claims 1 to 3, wherein the processing circuitry is configured to control the transceiver to receive an information from the access point related to the first SSID in case the communication device is located in proximity of the access point.

5. The communication device according to claim 4, wherein said information is the second SSID or information describing the second SSID.

6. An access point comprising:
a transceiver for receiving and transmitting signals; and
a processing circuitry configured to:
control the transceiver to
- transmit a first service set identifier, SSID, which is an encrypted second SSID of the access point;
- receive, from a communication device, access information related to the first SSID; and
- transmit, to the communication device, a private key for obtaining a second SSID by applying the private key to the first SSID.

7. The access point according to claim 6, wherein the processing circuitry is further configured to:
control the transceiver to receive an Internet access request accompanied by the second SSID from the communication device; and
enabling the Internet access to the communication device.

8. The access point according to claim 6 or 7, wherein the processing circuitry is further configured to:
upon receiving the first SSID and the password, determine whether the communication device is legitimate,
if the communication device is considered to be legitimate, transmit, to the communication device, the private key for obtaining the second SSID.

9. The access point according to claim 8, wherein the processing circuitry is further configured to not transmit, to the communication device, the private key for obtaining the second SSID, if the communication device is considered not to be legitimate.

10. The access point according to claim 8 or 9 wherein the processing circuitry is further configured to, if the communication device is considered not to be legitimate, transmit, to the communication device, a private key for obtaining a third SSID.

11. The access point according to any of claims 8 to 10, wherein the determining whether the communication device is legitimate comprises at least one of:
- determining whether the communication device is located in a proximity of the access point,
- determining whether received signal power exceeds a predefined threshold,
- determine whether radio frequency impairments match predefined characteristics,
- determining time of arrival, time of transmission, time of flight, and/or time difference of arrival;
- determine whether medium access control, MAC, address is included in a set of predetermined MAC addresses.

12. The access point according to claim 10 or 11, wherein the processing circuitry is configured to:
control the transceiver to receive a message from the communication device,
determine whether the communication device is legitimate,
in case the communication device is determined as legitimate, transmitting to the communication device an information related to the first SSID, and
in case the communication device is determined as not legitimate, not transmitting to the communication device an information related to the first SSID

13. The access point device according to claim 9, wherein said information is the second SSID or information describing the second SSID.

14. A method for a communication device comprising:
obtaining, from an access point, an first service set identifier, SSID, which is an encrypted second SSID of the access point;
transmitting to the access point access information related to the first SSID;
receiving, from the access point, a private key; and
obtaining the second SSID of the access point by applying the private key to the first SSID.

15. A method for an access point comprising:
transmitting a first service set identifier, SSID, which is an encrypted second SSID of the access point;
receiving, from a communication device, access information related to the first SSID; and
transmitting, to the communication device, a private key for obtaining a second SSID by applying the private key to the first SSID.
